# EUROPÄISCHE PATENTSCHRIFT

(11) **EP 3 204 194 B1**
(45) Veröffentlichungstag und Bekanntmachung des Hinweises auf die Patenterteilung: **07.06.2023**
(21) Anmeldenummer: 15775192.6
(22) Anmeldetag: 05.10.2015
(51) Int. Cl.: B25J 9/10, F15B 15/22, B25J 9/16, B25J 19/00

(54) **VERFAHREN ZUR OPTIMIERUNG DES BETRIEBS EINER HANDHABUNGSEINHEIT, INSBESONDERE EINER LINEAR- ODER SCHWENKEINHEIT, UND ANORDNUNG HIERFÜR**
METHOD FOR OPTIMIZING THE OPERATION OF A HANDLING UNIT, IN PARTICULAR A LINEAR OR PIVOT UNIT, AND AN ARRANGEMENT FOR SAME
PROCÉDÉ POUR OPTIMISER LE FONCTIONNEMENT D'UNE UNITÉ DE MANIPULATION, EN PARTICULIER D'UNE UNITÉ LINÉAIRE OU PIVOTANTE, ET AGENCEMENT ASSOCIÉ

(30) Priorität: 06.10.2014 DE 102014220166
(43) Veröffentlichungstag der Anmeldung: 16.08.2017
(73) Patentinhaber: Schunk GmbH & Co. KG Spann- und Greiftechnik, 74348 Lauffen (DE)
(72) Erfinder: HAERER, Samuel, 74354 Besigheim (DE); BECKER, Ralf, 71672 Marbach (DE); HAUBER, Rahel, 74343 Sachsenheim (DE); DRAB, Michael, 6314 Unterägeri (CH)
(74) Vertreter: DREISS Patentanwälte PartG mbB
(86) Internationale Anmeldenummer: PCT/EP2015/072891
(87) Internationale Veröffentlichungsnummer: WO 2016/055397

(56) Entgegenhaltungen:
- EP-A2- 1 980 756
- DE-A1-102009 017 055
- DE-A1-102010 025 781
- US-A- 4 828 094

## Beschreibung

Die Erfindung betrifft ein Verfahren zur Optimierung des Betriebs einer Handhabungseinrichtung, insbesondere einer Linear- oder Schwenkeinheit oder einer "Pick & Place"-Einheit. Die Erfindung betrifft auch eine dazugehörige Anordnung.

Derartige Handhabungseinrichtungen sind in vielfältiger Art und Weise bekannt, beispielsweise aus der EP-A-1 980 756 oder der US-A-4 828 094. Sie finden insbesondere in der Automatisierungstechnik Anwendung. So kann beispielsweise am Schwenkteil einer Schwenkeinheit eine Trägerplatte zur Anordnung von Werkstücken anordenbar sein oder sind Manipulatoren, beispielsweise Greifer, anordenbar, um Gegenstände zu greifen. Aus der DE 10 2009 017 055 A1 ist ein Verfahren zum Betrieb einer Schwenkeinheit bekannt.

Derartige Handhabungseinrichtungen weisen ein Grundteil, ein im Grundteil zwischen zwei Endlagen bewegbar angeordnetes Bewegungsteil eine Antriebseinrichtung zum Bewegen des Bewegungsteils und eine Bremseinrichtung zum Abbremsen des bewegbaren Bewegungsteils im Bereich der beiden Endlagen auf. Dabei kann die Antriebseinrichtung und/oder die Bremseinrichtung einstellbar sein. Regelmäßig handelt es sich bei der einstellbaren Bremseinrichtung um Stoßdämpfer, wobei je ein Stoßdämpfer im Bereich jeder Endlage vorgesehen ist. Dabei sind verschiedene Parameter der Stoßdämpfer bzw. der Antriebseinrichtung, insbesondere der Stoßdämpferhub und die Dämpfungshärte händisch einzustellen, wobei die Dämpfungshärte beispielsweise über ein Drosselrückschlagventil der Antriebseinrichtung oder eine Feder einstellbar ist. Dieses Einstellen nur "nach Gefühl" verlangt viel Erfahrung und ein gutes Gefühl für eine optimale Endlagendämpfung. Die Endlagendämpfung ist dabei die Dämpfung in dem Zeitraum zwischen dem in Kontakt kommen mit dem Stoßdämpfer und dem Erreichen der tatsächlichen Endlage. Dabei erfolgt das Einstellen der Endlagendämpfung gemäß dem Stand der Technik nach optischer Beurteilung des Bewegungsablaufs. Die Optimierung des Betriebs der Handhabungseinrichtung bedeutet folglich, dass die Bewegung des Bewegungsteils innerhalb einer Sollzeit harmonisch abgebremst werden soll. Damit ist gemeint, dass das Bewegungsteil während der Abbremsphase durch die Bremseinrichtung möglichst ruckfrei, also weitestgehend kontinuierlich abgebremst werden soll, folglich nach Möglichkeit lediglich negativ beschleunigt werden soll bzw. beim Abbremsvorgang möglichst wenige Vorzeichenwechsel der Beschleunigung zwischen positiver und negativer Beschleunigung auftreten sollen.

Handelt es sich bei der einstellbaren Bremseinrichtung um einen Stoßdämpfer, so kann beispielsweise ein zu langsames Erreichen der Endlage darauf hindeuten, dass der Stoßdämpferhub zu lange ist. Andererseits kann ein Anschlagen des Stoßdämpferkolbens an das Gehäuse darauf hindeuten, dass der Stoßdämpferhub zu kurz ist. Wird das Bewegungsteil während der Abbremsphase zeitweise auch positiv beschleunigt, so deutet dies auf eine zu hohe Dämpfungshärte hin.

Für das Einstellen wird relativ viel Zeit benötigt, was insbesondere dann problematisch ist, wenn das Bewegungsteil der Handhabungseinrichtung regelmäßig mit unterschiedlichen Massen beaufschlagt und bewegt wird. Eine derartige regelmäßige Änderung des Trägheitsmoments des Bewegungsteils verlangt auch nach einer Anpassung der Endlagendämpfung, indem die einstellbaren Parameter der Bremseinrichtung angepasst werden. Falsche Einstellungen führen dabei zu Überbeanspruchung, Verschleiß, verringerter Leistungsfähigkeit und letztlich zu frühzeitigen Ausfällen der Bremseinrichtung und/oder der Antriebseinrichtung.

Der vorliegenden Erfindung liegt die Aufgabe zugrunde, den genannten Nachteilen des Standes der Technik Abhilfe zu schaffen.

Diese Aufgabe wird mit einem Verfahren mit den Merkmalen des Anspruchs 1 gelöst. Es ist folglich vorgesehen, dass ein Smartphone oder ein Tablet mittelbar oder unmittelbar am Bewegungsteil der Handhabungseinheit angeordnet wird. Außerdem wird das Bewegungsteil zwischen den Endlagen bewegt, wobei die Beschleunigung mittels wenigstens eines Beschleunigungs- und/oder Gyrosensors des Smartphones oder des Tablets gemessen wird. Ferner wird eine Applikationssoftware zum Auswerten der Messwerte der gemessenen Beschleunigung und/oder des daraus resultierenden zeitlichen Beschleunigungsverlaufs verwendet. Letztlich wird eine Handlungsempfehlung für die Bremseinrichtung und/oder die Antriebseinrichtung durch die Applikationssoftware basierend auf der Auswertung ausgegeben.

Ein derartiges Verfahren zeichnet sich also dadurch aus, dass ein Smartphone oder ein Tablet zur Optimierung des Betriebs der Handhabungseinrichtung verwendet wird. Dabei kann das Smartphone oder das Tablet mittelbar oder unmittelbar auf dem Bewegungsteil angeordnet sein. Ferner kann das Smartphone oder das Tablet an einer beliebigen Stelle am Bewegungsteil angeordnet sein. Weiterhin kann das Smartphone oder das Tablet auch an einem Aufbau, welcher am Bewegungsteil angebracht ist, angeordnet sein. Bei einem derartigen Aufbau kann es sich beispielsweise um eine Trägerplatte zur Anordnung von Werkstücken oder um Manipulatoren zum Greifen von Gegenständen handeln.

Allerdings muss das Smartphone oder das Tablet wenigstens einen Beschleunigungs- und/oder Gyrosensor aufweisen. Regelmäßig sind dabei drei Bewegungssensoren eingebaut, wobei je ein Sensor eine Beschleunigung in x-, y- und z-Richtung erfasst. Somit kann eine ausreichend genaue Erfassung von Beschleunigungen in allen drei Raumrichtungen erzielt werden.

Ein derartiges Verfahren zeichnet sich weiterhin dadurch aus, dass eine Applikationssoftware angewendet wird, wobei diese die gemessenen Messwerte auswertet. Dabei erfolgt die Auswertung mittels eines Auswertungsalgorithmus oder mittels zulässiger, insbesondere im Smartphone oder Tablet hinterlegter Kennwerte erfolgen. Dabei stellen die Kennwerte einen "optimalen" Bewegungsablauf des Bewegungsteils der Handhabungseinheit dar, sodass keine Über- oder Fehlbeanspruchung auftritt. Weiterhin gibt die Applikationssoftware eine Handlungsempfehlung für die Bremseinrichtung und/oder die Antriebseinrichtung basierend auf dieser Auswertung aus.

Dieses Verfahren ermöglicht eine Optimierung des Betriebs der Handhabungseinrichtung, indem die Endlagendämpfung optimiert wird, wobei sich der Bediener nicht mehr auf sein "Gefühl" und seine Erfahrung verlassen muss, sondern durch die Applikationssoftware eine Handlungsempfehlung erhält. Damit kann insbesondere die Bewegung des Bewegungsteils innerhalb einer Sollzeit möglichst harmonisch und damit ruckfrei abgebremst werden, indem die Anzahl der Vorzeichenwechsel zwischen positiver und negativer Beschleunigung auf ein für den Betrieb der Handhabungseinrichtung günstiges Maß reduziert und optimaler Weise eliminiert wird.

Insbesondere kann es sich bei der einstellbaren Bremseinrichtung um einen Stoßdämpfer handeln, wobei insbesondere vorgesehen sein kann, dass die Applikationssoftware eine Empfehlung ausgibt, ob und in welche Richtung der Stoßdämpferhub und/oder die Dämpfungshärte verstellt werden muss bzw. soll.

Weiterhin bietet dieses Verfahren die Möglichkeit, auftretenden Verschleiß der einstellbaren Bremseinrichtung zu erkennen. Dabei wird das Verfahren regelmäßig in Wartungszyklen integriert. Weichen die dabei gemessenen Messwerte deutlich von einem günstigen Bewegungsverlauf ab, so kann der Bediener darauf reagieren, beispielsweise durch Austausch von Verschleißteilen.

Weiterhin bietet dieses Verfahren die Möglichkeit, besonders einfach eine Optimierung des Betriebs einer Handhabungseinrichtung zu erzielen, indem lediglich ein Smartphone oder ein Tablet, eine auf dem Smartphone oder Tablet installierte Applikationssoftware und Kennwerte eines günstigen Bewegungsverlaufs der Handhabungseinrichtung benötigt werden, wobei die Applikationssoftware auf die Kennwerte zugreifen kann.

Insgesamt wird durch das Verfahren gemäß dem Anspruch 1 eine einfachere, schnellere und genauere Einstellung einer einstellbaren Bremseinrichtung einer Handhabungseinheit bereitgestellt, wodurch der Betrieb der Handhabungseinrichtung optimiert wird. Insbesondere wird der Verschleiß der Bremseinrichtung durch falsche Einstellung reduziert.

Bei den hinterlegten Kennwerten kann es sich beispielsweise um eine Sollzeit bis zum Erreichen der Endlage und/oder um die Anzahl der Vorzeichenwechsel des zeitlichen Beschleunigungsverlaufs zwischen positiver und negativer Beschleunigung und/oder um die maximale Beschleunigung und/oder um das Verhältnis der maximalen positiven zu der maximalen negativen Beschleunigung handeln. Weiterhin kann es sich bei den Kennwerten auch um Kundendaten handeln, sodass individuelle Handlungsempfehlungen ermöglicht werden.

Dabei ist ebenso denkbar, dass die Messwerte oder der daraus resultierende zeitliche Beschleunigungsverlaufs nach der Messung von dem Smartphone oder dem Tablet auf einen Computerserver übermittelt werden, dass auf dem Computerserver mittels einer Applikationssoftware die Messwerte oder der daraus resultierende zeitliche Beschleunigungsverlauf ausgewertet wird und dass die Handlungsempfehlung entweder durch die Applikationssoftware des Smartphones oder Tablets oder/und durch einen mit dem Computerserver verbundenen Bildschirm ausgegeben wird. Dabei wird mittels des Smartphones oder des Tablets lediglich die Beschleunigung gemessen bzw. der daraus resultierende zeitliche Beschleunigungsverlauft gemessen. Die Auswertung erfolgt dann auf einem externen Server. Dadurch wird ermöglicht, dass die Applikationssoftware auf dem Smartphone oder dem Tablet kein Update benötigt und aktuelle Kennwerte lediglich auf dem Server vorhanden sein müssen. Weiterhin kann vorgesehen sein, dass die Applikationssoftware die gemessenen Messwerte über die Zeit integriert. Die dadurch erhaltenen Geschwindigkeitswerte und der dazugehörige zeitliche Geschwindigkeitsverlauf kann daraufhin ebenso somit im Smartphone oder im Tablet hinterlegten Kennwerten verglichen werden. Dadurch kann nicht nur eine Handlungsempfehlung basierend auf dem Beschleunigungsverlauf ausgegeben werden, sondern es kann auch der gemessene Geschwindigkeitsverlauf mit einem optimalen Geschwindigkeitsverlauf verglichen werden und basierend darauf eine Handlungsempfehlung durch die Applikationssoftware ausgegeben werden. Damit kann beispielsweise auch die maximale Anzahl an Zyklen pro Stunde und die damit verbundene Pausenzeit zwischen den Intervallen angepasst werden.

Dabei ist vorteilhaft, wenn die Handlungsempfehlung visuell auf dem Bildschirm des Smartphones oder des Tablets dargestellt wird. Es ist einerseits denkbar, dass eine konkrete Handlungsempfehlung, wie beispielsweise "die Dämpfungsrate des Stoßdämpfer um 2,5% erhöhen", "den Stoßdämpferhub um 1 mm verringern" oder "das Drosselrückschlagventil 0,25 Umdrehungen öffnen" auf dem Bildschirm dargestellt wird. Andererseits ist denkbar, dass die Empfehlung auf dem Bildschirm farblich dargestellt wird. Ähnlich wie bei einer Ampel, kann dabei vorgesehen sein, dass das Aufleuchten einer roten Farbe auf dem Bildschirm bedeutet, dass eine oder mehrere einstellbare Parameter der Handhabungseinheit angepasst werden sollen, um eine Annäherung an einem optimalen Betrieb einer Handhabungseinheit zu erzielen. Das Aufleuchten einer gelben Farbe kann bedeuten, dass die Einstellungen der Handhabungseinrichtungen in der Nähe eines Optimums ist, wobei noch eine oder mehrere Einstellparameter angepasst werden können, um eine weitere Verbesserung des Betriebs zu erzielen. Das Aufleuchten einer grünen Farbe kann bedeuten, dass kein einstellbarer Parameter angepasst werden soll, sondern dass die Handhabungseinrichtung optimal eingestellt ist.

Ebenso ist denkbar, dass die Handlungsempfehlung akustisch ausgegeben wird. Einerseits ist dabei denkbar, dass lediglich ein Geräusch ausgegeben wird, wobei das ausgegebene Geräusch variiert, abhängig davon, inwieweit die Bewegung des Bewegungsteils bereits im Bereich eines günstigen Bewegungsverlaufs liegt. Andererseits ist denkbar, dass eine konkrete Handlungsempfehlung akustisch ausgegeben wird. Beispielsweise ist denkbar, dass ausgegeben wird "Bitte den Stoßdämpferhub um 1 mm verringern".

Wie beschrieben ist es denkbar, dass entsprechend der Handlungsempfehlung eine oder mehrere einstellbare Parameter der Bremseinrichtung und/oder der Antriebseinrichtung händisch angepasst werden. Allerdings ist auch denkbar, dass die Handlungsempfehlung an eine übergeordnete Steuereinrichtung, insbesondere kabellos mittels WLAN, Bluetooth o.ä., übermittelt wird und mittels der Steuereinrichtung einer oder mehrere einstellbare Parameter entsprechend der Handlungsempfehlung angepasst werden. Dabei kann ein besonders vorteilhaftes Verfahren bereitgestellt werden, da nicht nur eine Handlungsempfehlung ausgegeben wird, sondern mittels der Steuereinrichtung auch eine Anpassung der Handhabungseinrichtung gemäß der Handlungsempfehlung vorgenommen wird.

Vorteilhafterweise wird das Bewegen des Bewegungsteils zwischen den Endlagen und das Messen der Beschleunigung, das Auswerten der Messwerte mit beispielsweise hinterlegten Kennwerten und das Ausgeben einer Handlungsempfehlung wiederholt durchgeführt. Dabei ist zudem vorteilhaft, wenn daraufhin die Anpassung eines oder mehrere einstellbarer Parameter entsprechend der Handlungsempfehlung durchgeführt wird. Dies ermöglicht eine weitere Annäherung an einen günstigen Bewegungsverlauf.

Dieses Vorgehen wird iterativ solange wiederholt, bis die Handlungsempfehlung ausgegeben wird, dass kein Parameter anzupassen ist. Dies ermöglicht eine iterative Annährung an einen günstigen Bewegungsverlauf.

Vorteilhafterweise sind auf dem Smartphone oder dem Tablet die zulässigen Kennwerte verschiedener Handhabungseinrichtungen hinterlegt, oder werden während der Durchführung des Verfahrens vor dem Vergleich der gemessenen Messwerte mit den Kennwerten an das Smartphone oder das Tablet übermittelt. Dies ermöglicht eine besonders flexibel einsetzbare Anwendung dieses Verfahrens. Insbesondere ist dabei denkbar, dass Kennwerte verschiedener Schwenkeinheiten und/oder Lineareinheiten hinterlegt sind. Mittels der Applikationssoftware kann daraufhin diejenige Handhabungseinrichtung mit den dazugehörigen Kennwerten ausgewählt werden, an der das Verfahren zur Optimierung der Handhabungseinrichtung durchgeführt werden soll. Bei den Kennwerten kann es sich insbesondere um einen optimalen zeitlichen Beschleunigungs- und/oder Geschwindigkeitsverlauf des Bewegungsteils bei der Bewegung zwischen den beiden Endlagen handeln.

Ist die Applikationssoftware vor dem Anbringen des Smartphones oder des Tablets am Bewegungsteil noch nicht auf dem Smartphone oder dem Tablet installiert, so ist denkbar, dass dies unmittelbar vor oder nach dem Anbringen des Smartphones oder des Tablets an dem Bewegungsteil durchgeführt wird.

Vorzugsweise handelt es sich bei der einstellbaren Bremseinheit um einen Stoßdämpfer, insbesondere einen hydraulischen Stoßdämpfer. Dabei ist denkbar, dass der Stoßdämpferhub und/oder die Dämpfungshärte aufgrund der Handlungsempfehlung angepasst wird.

Weiterhin ist dabei denkbar, dass in einem ersten Schritt die Antriebseinrichtung angepasst wird, beispielsweise indem die Einstellung eines zu der Antriebseinrichtung gehörigen Drosselrückschlagventils angepasst wird und die ausgegebenen Handlungsempfehlungen folglich lediglich das Drosselrückschlagventil betreffen und in einem zweiten Schritt der Stoßdämpferhub angepasst wird, wobei die dann ausgegebenen Handlungsempfehlungen folglich lediglich den Stoßdämpferhub betreffen.

Die Aufgabe wird auch durch eine Anordnung zur Durchführung des erfindungsgemäßen Verfahrens gelöst, wobei sich die Anordnung dadurch auszeichnet, dass am Bewegungsteil eine Schnittstelle bereitgestellt wird, an der ein Smartphone oder ein Tablet mittelbar oder unmittelbar angeordnet ist. Dabei kann es sich einerseits um eine Smartphone- oder Tablethalterung handeln. Andererseits ist auch denkbar, dass das Smartphone oder Tablet mittels Klebeband oder einem anderen Verbindungsmittel an dem Bewegungsteil angeordnet ist. Dabei wird die Schnittstelle folglich durch das Klebeband oder das andere Verbindungsmittel gebildet.

Weitere Einzelheiten und vorteilhafte Ausgestaltungen der Erfindung sind der nachfolgenden Beschreibung zu entnehmen, anhand derer ein Ausführungsbeispiel der Erfindung näher beschrieben und erläutert sind.

Es zeigen:
Figur 1: eine schematische Seitenansicht einer erfindungsgemäßen Anordnung;
Figur 2: eine schematische Draufsicht auf eine weitere erfindungsgemäße Anordnung;
Figur 3: eine schematische Draufsicht auf eine dritte erfindungsgemäße Anordnung;

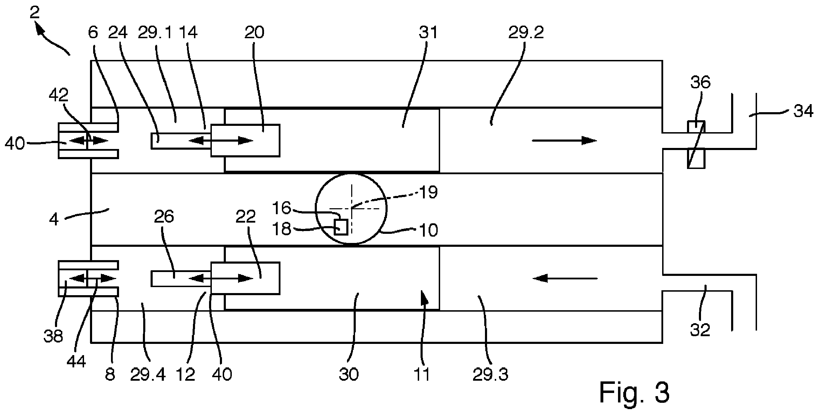

Figur 3: ein Diagramm einer erfindungsgemäßen Ausführungsform des Verfahrens für eine Anordnung nach Fig. 3;

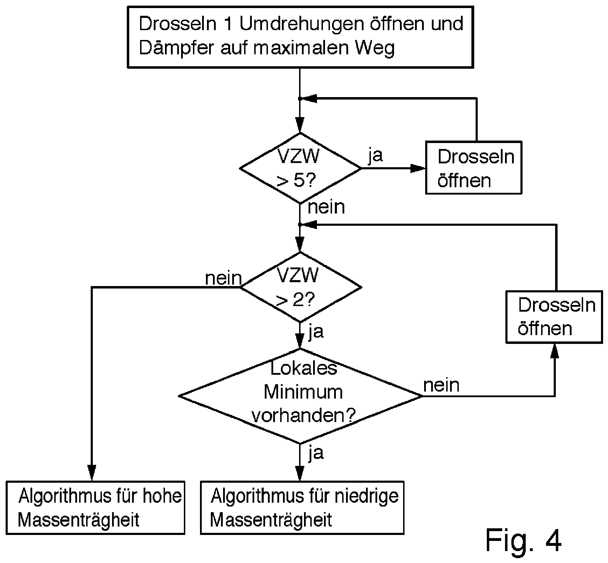

Figur 4: ein Diagramm einer weiteren erfindungsgemäßen Ausführungsform des Verfahrens; und

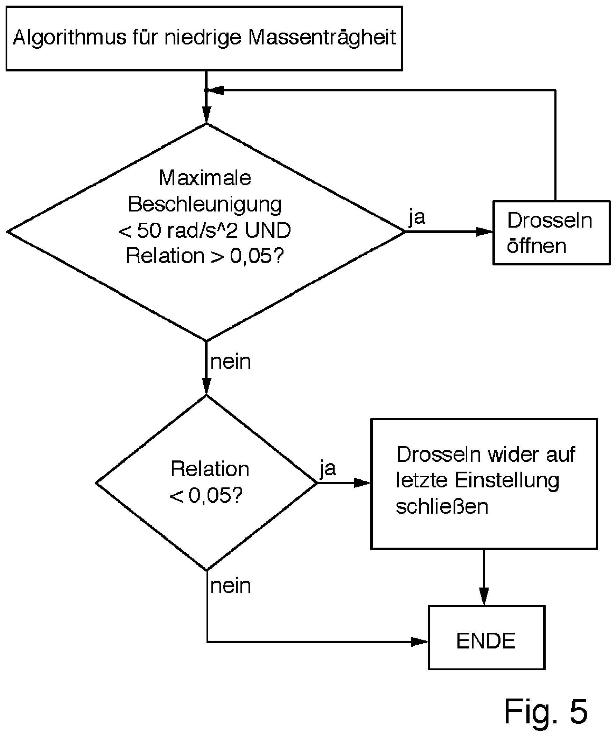

Figur 5: ein Diagramm einer nochmals weiteren erfindungsgemäßen Ausführungsform des Verfahrens.

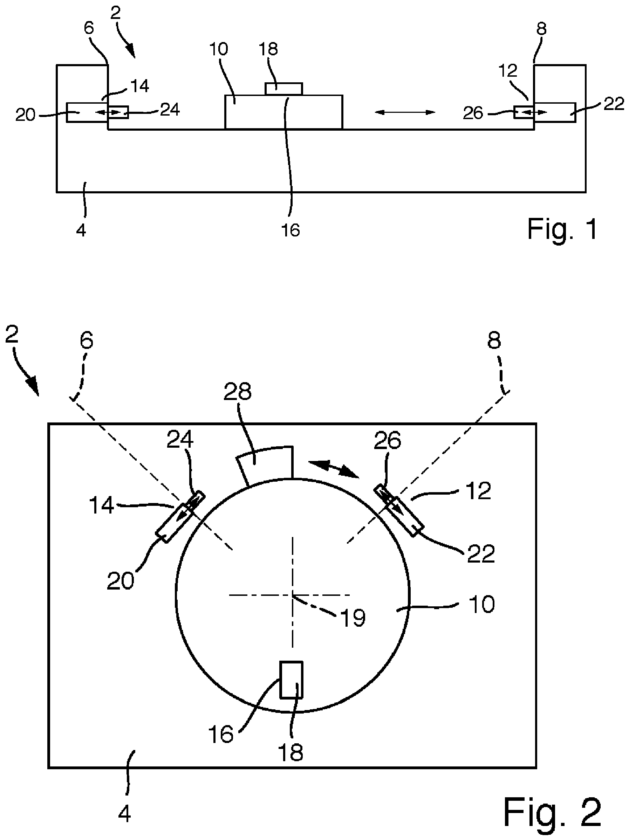

In der Figur 1 ist eine Handhabungseinrichtung 2 in Form einer Lineareinheit gezeigt, wobei die Handhabungseinrichtung 2 ein Grundteil 4, ein an dem Grundteil 4 zwischen zwei Endlagen 6, 8 bewegbar angeordnetes Bewegungsteil 10 und zwei einstellbare Bremseinrichtungen 12, 14 aufweist. Das Bewegungsteil 10 kann dabei über eine nicht dargestellte Antriebseinrichtung zwischen den beiden Endlagen 6, 8 bewegt werden. An einer Schnittstelle 16 des Bewegungsteils 10 ist ein Smartphone 18 angeordnet. Bei den Bremseinrichtungen 12, 14 handelt es sich um zwei Kolben-Zylinder-Stoßdämpfer mit einem Zylinder 20, 22 und einem im Zylinder verschiebbar geführten Kolben 24, 26, wobei je eine Bremseinrichtung 12, 14 im Bereich je einer Endlage 6,8 angeordnet ist. Bei derartigen Bremseinrichtungen 12, 14 sind verschiedene Parameter, insbesondere der Stoßdämpferhub und die Dämpfungshärte händisch einzustellen, wobei die Dämpfungshärte bei hydraulischen Stoßdämpfern über beispielsweise ein Drosselrückschlagventil oder bei federvorgespannten Stoßdämpfern über eine Feder einstellbar ist.

Wird das erfindungsgemäße Verfahren durchgeführt, so wird in einem ersten Schritt die Applikationssoftware auf dem Smartphone 18 geöffnet. Daraufhin kann in der Applikationssoftware diejenige Handhabungseinrichtung 2 ausgewählt werden, an der das Verfahren durchgeführt werden soll. In diesem Fall wird folglich die in Figur 1 gezeigte Lineareinheit ausgewählt. Daraufhin lädt die Software die zu der ausgewählten Handhabungseinrichtung 2 gehörenden zulässigen Kennwerte. In einem nächsten Schritt wird das Bewegungsteil 10 von einer ersten Endlage 6 zu einer zweiten Endlage 8 bewegt, wobei mit dem Smartphone 18 die Beschleunigung des Bewegungsteils 10 mittels der Beschleunigungssensoren gemessen wird. Dabei entsprechen die Sensorsignale einer positiven oder negativen Beschleunigung. Im Bereich der zweiten Endlage 8 wird das Bewegungsteil 10 mittels der Bremseinrichtung 12 abgebremst, wobei der Kolben 26 in den Zylinder 22 eintaucht.

In einem nächsten Schritt wird der zeitliche Verlauf der Beschleunigungswerte mittels der Applikationssoftware des Smartphones 18 mit hinterlegten Kennwerten verglichen. Bei den Kennwerten kann es sich dabei folglich um einen günstigen zeitlichen Beschleunigungsverlauf des Bewegungsteils 10 von einer ersten Endlage 6 zu einer zweiten Endlage 8 handeln.

Anhand dieses Vergleichs gibt die Applikationssoftware schließlich eine Handlungsempfehlung für einen oder mehrere einstellbare Parameter der Bremseinrichtung 12 und/oder der Antriebseinrichtung aus. Entsprechend der Handlungsempfehlung werden daraufhin eine oder mehrere einstellbare Parameter der Bremseinrichtung 12 und/oder der Antriebseinrichtung händisch angepasst.

Das Bewegen des Bewegungsteils 10 von der ersten Endlage 6 zu der zweiten Endlage 8 und das Messen der Beschleunigung, das Vergleichen der Messwerte mit hinterlegten Kennwerten, das Ausgeben einer Handlungsempfehlung und das händische Einstellen der Bremseinrichtung 12 und/oder der Antriebseinrichtung wird daraufhin wiederholt durchgeführt bis in der Handlungsempfehlung ausgegeben wird, dass kein Parameter mehr anzupassen ist. Dies bedeutet, dass ein günstiger Bewegungsverlauf erreicht wurde.

Dabei ist einerseits denkbar, dass die ausgegebenen Handlungsempfehlungen ebenso für die Bremseinrichtung 14 verwendet werden. Andererseits ist denkbar, dass in einem weiteren Schritt das erfindungsgemäße Verfahren erneut durchgeführt wird, wobei in diesem Fall das Bewegungsteil 10 von der zweiten Endlage 8 in die erste Endlage 6 bewegt wird. Weiterhin ist auch denkbar, das Messen der Beschleunigung, das Vergleichen der Messwerte mit hinterlegten Kennwerten, das Ausgeben einer Handlungsempfehlung und das händische Einstellen der Bremseinrichtung 12, 14 jeweils abwechselnd für eine Bewegung von der ersten Endlage 6 in die zweite Endlage 8 und von der zweiten Endlage 8 in die erste Endlage 6 durchzuführen.

Durch Messung der Beschleunigung insbesondere während der Endlagendämpfung, also in dem Zeitraum zwischen in Kontakt kommen mit dem Dämpferkolben 24,26 und dem Erreichen der Endlage kann also festgestellt werden, ob ein harmonisches und ruckfreies Abbremsen vorliegt. Bei übermäßig ruckhaftem Abbremsen ist folglich ein Einstellen der Bremseinrichtung 12, 14 gemäß der Handlungsempfehlung vorzunehmen, so dass sich letztlich eine ausreichend harmonische Abbremsung, also negative Beschleunigung, ergibt.

Figur 2 zeigt eine Handhabungseinrichtung 2 in Form einer Schwenkeinheit, wobei entsprechende Bezugszeichen für entsprechende Bestandteile verwendet werden, wie sie in Figur 1 gezeigt sind. In einem Grundteil 4 ist folglich ein drehbar gelagertes Bewegungsteil 10 angeordnet. Das Bewegungsteil 10 ist dabei um eine Schwenkachse 19 rotatorisch zwischen den beiden Endlagen 6, 8 bewegbar. Dabei wirkt ein Anschlagabschnitt 28 des Bewegungsteils 10 mit den beiden Stoßdämpfern 12, 14 zusammen, sodass das Bewegungsteil 10 im Bereich der Endlagen 6, 8 abgebremst wird. Wie aus der Figur 2 hervorgeht, ist ein Smartphone 18 an einer Schnittstelle 16 des Bewegungsteils 10 angeordnet. Das Smartphone 18 muss dabei nicht mittig auf dem Bewegungsteil 10 angeordnet sein.

Figur 3 zeigt eine Handhabungseinrichtung 2 in Form einer Schwenkeinheit wie sie beispielsweise in der DE 10 2009 017 055 offenbart wurde, wobei entsprechende Bezugszeichen für entsprechende Bestandteile verwendet werden, wie sie in Figur 1 und 2 gezeigt sind.

In einem Grundteil 4 ist ein drehbar gelagertes Bewegungsteil 10 angeordnet. Das Bewegungsteil 10 ist dabei um eine Schwenkachse 19 rotatorisch bewegbar. Dabei ist das Bewegungsteil 10 mit im Grundteil 4 beweglich geführten, Druckräume 29.1, 29.2, 29.3 und 29.4 begrenzenden Druckkolben 30, 31 bewegungsgekoppelt und somit von einer ersten Endlage in eine zweite Endlage bewegbar. Der erste Druckkolben 30 ist zu bzw. von einer erste Endlage 6 hin- bzw. wegbewegbar und der zweite Mitnehmer 31 ist zu bzw. von einer zweiten Endlage 8 hin- bzw. wegbewegbar ist. Die Druckräume 29.1, 29.2, 29.3 und 29.4 werden dabei pneumatisch über einen gemeinsamen Zuluftkanal 32 und einen gemeinsamen Abluftkanal 34 wechselseitig zum Antreiben der Druckkolben 30, 31 druckbeaufschlagt, wobei dazu erforderliche Druckleitungen und/oder Ventile in oder am Grundteil 4 nicht gezeigt sind. Die im Grundteil 4 bzw. in dessen Druckräumen 29.1, 29.2, 29.3 und 29.4 geführten Druckkolben 30, 31 bilden somit eine Antriebseinrichtung 11 für das Bewegungsteil 10.

Im Abluftkanal der Antriebseinrichtung 11 ist ein einstellbares Drosselrückschlagventil 36 als Abluftventil zum Einstellen der Antriebseinrichtung angeordnet. Bei weit geöffnetem Drosselrückschlagventil 36 ist die Beschleunigung der Druckkolben 30, 31 größer als bei weiter geschlossenem Drosselrückschlagventil 36.

Zudem sind Stoßdämpfer 12, 14 an den Druckkolben 30, 31 angeordnet. Findet eine Bewegung des Druckkolbens 30 in Richtung der Endlage 8 statt, so trifft der bewegliche Stoßdämpferkolben 26 im Endlagenbereich auf einen in axialer Richtung einstellbaren Anschlagbolzen 38. Der Anschlagbolzen 38 ist dabei als in den Endanschlag 8 eingeschraubte Madenschraube ausgebildet. Der Endanschlag 8 umgibt folglich den Anschlagbolzen 38. Durch Auftreffen des Stoßdämpferkolbens 26 auf den Endanschlag 8 wird gesamte Druckkolben 30 abgebremst, bis letztlich das vordere Ende des Zylinders 22 des Stoßdämpfers 12 auf den Endanschlag 8 trifft. Der Hub des Stoßdämpfers 12 ist dabei mittels des einstellbaren Anschlagbolzens 38 veränderbar, wobei eine Anpassung der Lage des Anschlagbolzens 38 in Pfeilrichtung 44 erfolgt. Entsprechend verhält es sich bei der Bewegung des Druckkolbens 31, wenn der Stoßdämpfer 14, bzw. dessen Stoßdämpferkolben 24 auf den in Richtung des Pfeils 42 verstellbaren Anschlagbolzen 40 trifft.

Bei der in der Figur 3 gezeigten Schenkeinheit können folglich zum einen die Antriebseinheit 11 durch Verstellen des Drosselrückschlagventils 36 und zum anderen die Hübe der Stoßdämpfer durch Verstellen der Anschlagbolzen 38, 40 verstellt werden.

Die Figuren 4 bis 6 zeigen in drei Diagrammen, wie das erfindungsgemäße Verfahren angewendet werden kann, um den Betrieb einer Handhabungseinrichtung 2 gemäß der Figur 3 zu optimieren.

Gemäß Figur 4 wird in einem ersten Schritt das Drosselrückschlagventil der Antriebseinrichtung 11 von einem geschlossenen Zustand um eine Umdrehung geöffnet und der Stoßdämpferhub wird durch verändern der Lage des Anschlagbolzens 38, 40 auf den maximalen Hubwert gesetzt. Daraufhin wird das Bewegungsteil 10 mittelbar durch die Druckkolben 30, 31 von einer ersten Endlage 6 in eine zweite Endlage 8 bewegt, wobei die Beschleunigung mittels der Beschleunigungssensoren oder eines Gyrosensors des Smartphones gemessen wird. Daraufhin wertet die Applikationssoftware den zeitlichen Beschleunigungsverlauf anhand der Messwerte aus. Werden bei der Endlagendämpfung mehr als fünf Vorzeichenwechsel VZW zwischen einer positiven und einer negativen Beschleunigung detektiert, so gibt die Applikationssoftware die Handlungsempfehlung aus, dass die Drossel um einen bestimmten Wert zu öffnen ist. Dieses Vorgehen wird solange wiederholt, bis fünf oder weniger Vorzeichenwechsel VZW während der Endlagendämpfung detektiert werden. Durch die Reduktion der Vorzeichenwechsel zwischen positiver und negativer Beschleunigung kann eine die Bewegung des Bewegungsteils innerhalb einer Sollzeit weitestgehend harmonisch und damit möglichst ruckfrei abgebremst werden, indem die Anzahl der Vorzeichenwechsel zwischen positiver und negativer Beschleunigung auf ein für den Betrieb der Handhabungseinrichtung günstiges Maß reduziert wird.

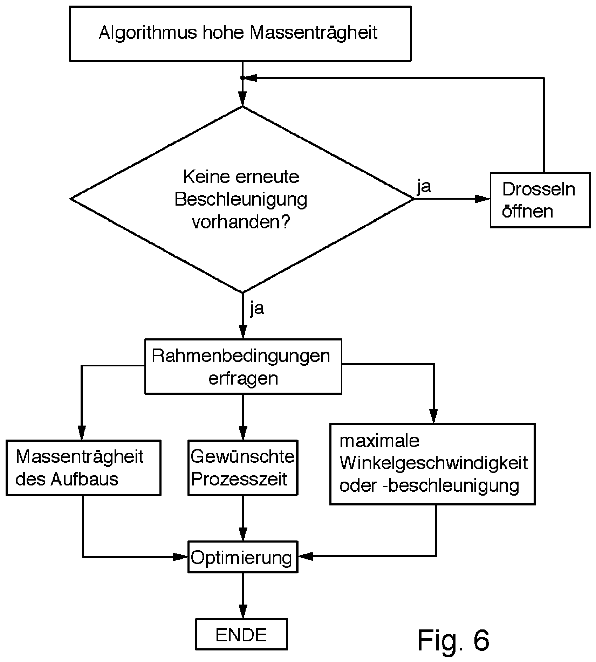

In einem nächsten Schritt wertet die Applikationssoftware aus, ob mehr als zwei Vorzeichenwechsel VZW während der Endlagendämpfung vorhanden sind. Ist dies nicht der Fall, wird ein Optimierungsalgorithmus für hohe Massenträgheiten angewandt, welcher in Figur 6 gezeigt sind. Sind mehr als zwei Vorzeichenwechsel VZW vorhanden, so wird der Beschleunigungsverlauf über die Zeit integriert, um einen Geschwindigkeitsverlauf zu erhalten. Daraufhin wertet die Applikationssoftware aus, ob ein lokales Minimum im Verlauf der Geschwindigkeit gegen die Zeit vorhanden ist, wobei als ein lokales Minimum lediglich ein lokales Minimum angesehen wird, das innerhalb eines Suchfensters von elf Messwerten liegt und wobei die Randwerte um 10 % oder 0,1 Rad/s² größer sind als der Wert in der Mitte des Suchfensters.

Ist kein lokales Minimum vorhanden, so wird die Handlungsempfehlung ausgegeben, dass die Drossel weiter zu öffnen ist. Dieses Vorgehen wird solange durchgeführt, bis ein lokales Minimum vorhanden ist. Daraufhin wird ein Algorithmus für niedrige Massenträgheiten angewandt.

Figur 5 zeigt den Algorithmus für niedrige Massenträgheiten, der von der Applikationssoftware zur Optimierung des Betriebs der Handhabungseinheit 2 durchgeführt wird. In einem ersten Schritt wird eine erneute Messung der Beschleunigung durchgeführt, wobei das Bewegungsteil 10 von der ersten mittelbar durch die Mitnehmer 30, 31 von einer ersten Endlage in die eine zweite Endlage bewegt wird. Daraufhin wertet die Applikationssoftware aus, ob die gemessene maximale Beschleunigung bei der Endlagendämpfung kleiner als 50 Rad/s² und die Relation des Maximums der Geschwindigkeit zum Minimum der Geschwindigkeit größer als 0,05 ist. Ist dies der Fall, so wird durch die Applikationssoftware die Handlungsempfehlung ausgegeben, dass die Drossel um einen bestimmten Wert zu öffnen ist. Dieses Vorgehen wird solange durchgeführt, bis die maximale Beschleunigung nicht mehr kleiner als 50 Rad/s² und/oder die Relation nicht mehr größer 0,05 ist. Daraufhin wertet die Applikationssoftware aus, ob die Relation kleiner 0,05 ist. Ist dies der Fall, so wird die Einstellungsempfehlung ausgegeben, dass die Drossel wieder auf die letzte Einstellung zu schließen ist und der Betrieb der Handhabungseinheit dann optimiert ist. Ist dies nicht der Fall, so wird die Handlungsempfehlung ausgegeben, dass die einstellbaren Parameter optimal eingestellt sind.

Figur 6 zeigt den Algorithmus für hohe Massenträgheit, der durch die Applikationssoftware angewendet wird. Hierbei wird eine erste Messung durchgeführt, wobei das Bewegungsteil 10 mittelbar durch die Mitnehmer 30, 31 von einer ersten Endlage in eine zweite Endlage bewegt wird. Dabei wertet die Applikationssoftware in einem ersten Schritt aus, ob nach Erreichen des Kolbens 26 eine erneute Beschleunigung des Bewegungsteils 10 stattfindet, oder ob nach Erreichen des Kolbens 26 ein kontinuierliches Abbremsen stattfindet. Ist eine erneute Beschleunigung vorhanden, so wird die Drossel um einen bestimmten Wert geöffnet. Dieses Vorgehen wird solange wiederholt bis keine erneute Beschleunigung vorhanden ist. Ist keine erneute Beschleunigung vorhanden, so werden von der Applikationssoftware die Rahmenbedingungen verarbeitet.

Dabei wird anhand der letzten durchgeführten Messungen die maximale Winkelgeschwindigkeit und/oder Winkelbeschleunigung als eine Rechengröße verwendet. Außerdem werden als eine zweite und dritte Rechengröße die für die Schwenkeinheit gewünschte Prozesszeit und die Masse des Aufbaus verwendet, wobei diese beiden Kennwerte auf dem Smartphone hinterlegt sind bzw. von dem Smartphone abgefragt werden oder an das Smartphone übermittelbar sind. Anhand dieser Rechengrößen gibt die Applikationssoftware daraufhin eine Handlungsempfehlung zur Optimierung der Schwenkeinheit aus.

## Patentansprüche

1. Verfahren zur Optimierung des Betriebs einer Handhabungseinheit (2), insbesondere einer Linear- oder Schwenkeinheit, wobei die Einheit ein Grundteil (2), ein an dem Grundteil (2) zwischen zwei Endlagen (6,8) bewegbar angeordnetes Bewegungsteil (10), eine Antriebseinrichtung (11) zum Bewegen des Bewegungsteils (10) und eine Bremseinrichtung (12, 14) zum Abbremsen des Bewegungsteils (10) umfasst, wobei die Antriebseinrichtung (11) und/oder die Bremseinrichtung (12, 14) einstellbar ist, bei dem die folgenden Schritte durchgeführt werden: a. Anordnen eines Smartphones (18) oder Tablets am Bewegungsteil (10); b. Bewegen des Bewegungsteils (10) zwischen den Endlagen (6,8) und Messen der Beschleunigung mittels wenigstens eines Beschleunigungs- und/oder Gyrosensors des Smartphones (18) oder Tablets; c. Anwenden einer Applikationssoftware zum Auswerten der Messwerte oder des daraus resultierenden zeitlichen Beschleunigungsverlaufs durch einen Auswertungsalgorithmus und/oder durch den Vergleich mit hinterlegten Kennwerten; d. Ausgeben einer Handlungsempfehlung für die Bremseinrichtung (12, 14) und/oder die Antriebseinrichtung (11) durch die Applikationssoftware basierend auf der Auswertung in Schritt c..

2. Verfahren nach Anspruch 1, **dadurch gekennzeichnet, dass** in Schritt c. die Auswertung mittels eines Algorithmus oder mittels im Smartphone oder im Tablet hinterlegten Kennwerten erfolgt.

3. Verfahren nach Anspruch 2, **dadurch gekennzeichnet, dass** die Kennwerte eine Sollzeit bis zum Erreichen der Endlage und/oder eine bestimmte zulässige Anzahl an Vorzeichenwechseln des zeitlichen Beschleunigungsverlaufs zwischen positiver und negativer Beschleunigung und/oder die maximale zulässige Beschleunigung und/oder das Verhältnis der maximalen positiven zu der maximalen negativen Beschleunigung umfassen.

4. Verfahren nach Anspruch 1 oder 2 oder 3, **dadurch gekennzeichnet, dass** in Schritt c. die Messwerte oder der daraus resultierende zeitliche Beschleunigungsverlaufs auf einen Computerserver übertragen werden, dass auf dem Computerserver mittels einer Applikationssoftware die Messwerte oder der daraus resultierende zeitliche Beschleunigungsverlauf ausgewertet wird und dass in Schritt d. die Handlungsempfehlung entweder durch die Applikationssoftware des Smartphones (18) oder Tablets oder/und durch einen mit dem Computerserver verbundenen Bildschirm ausgegeben wird.

5. Verfahren nach einem der Ansprüche 1 bis 4, **dadurch gekennzeichnet, dass** mittels der Applikationssoftware die Messwerte über die Zeit integriert werden und dass die Geschwindigkeitswerte oder der dadurch erhaltene zeitliche Geschwindigkeitsverlauf gemäß Schritt c. ausgewertet wird.

6. Verfahren nach Anspruch nach einem der Ansprüche 1 bis 4, **dadurch gekennzeichnet, dass** in Schritt d. die Empfehlung visuell auf dem Bildschirm des Smartphones (18) oder des Tablets dargestellt wird.

7. Verfahren nach Anspruch 5, **dadurch gekennzeichnet, dass** die Empfehlung auf dem Bildschirm farblich dargestellt wird, wobei rot bedeutet, dass ein oder mehrere einstellbare Parameter angepasst werden sollten, wobei gelb bedeutet, dass ein oder mehrere einstellbare Parameter angepasst werden können und wobei grün bedeutet, dass kein einstellbarer Parameter angepasst werden soll.

8. Verfahren nach einem der vorhergehenden Ansprüche, **dadurch gekennzeichnet, dass** in Schritt d. die Empfehlung akustisch ausgegeben wird.

9. Verfahren nach einem der vorhergehenden Ansprüche, umfassend den weiteren Schritt: e. Händisches Anpassen eines oder mehrerer einstellbarer Parameters entsprechend der Handlungsempfehlung aus Schritt d).

10. Verfahren nach einem der Ansprüche 1 bis 8, umfassend den weiteren Schritt: e. Übermitteln der Handlungsempfehlung an eine Steuereinrichtung und Anpassen eines oder mehrerer einstellbarer Parameter entsprechend der Handlungsempfehlung aus Schritt d) mittels der Steuereinrichtung.

11. Verfahren nach Anspruch 9 oder 10, umfassend die weiteren Schritte: f. Erneutes Durchführen der Schritte b. bis d.; g. Durchführen des Schrittes e., falls in Schritt d. die Handlungsempfehlung ausgegeben wird, einen Parameter anzupassen.

12. Verfahren nach Anspruch 11, umfassend den weiteren Schritt: h. Wiederholtes Durchführen des Verfahrens nach Anspruch 11 bis in Schritt d. die Handlungsempfehlung ausgegeben wird, dass kein Parameter anzupassen ist.

13. Verfahren nach einem der vorhergehenden Ansprüche, **dadurch gekennzeichnet, dass** vor der Durchführung des Schritts a. oder b. oder c. diejenige Handhabungseinheit (2), deren Betrieb optimiert werden soll, mittels der Applikationssoftware ausgewählt wird.

14. Verfahren nach einem der vorhergehenden Ansprüche, **dadurch gekennzeichnet, dass** vor oder nach Schritt a. die Applikationssoftware auf dem Smartphone (18) oder dem Tablet installiert wird, falls diese vor der Durchführung des Schritts a. noch nicht auf dem Smartphone (18) installiert war.

15. Verfahren nach einem der vorhergehenden Ansprüche, **dadurch gekennzeichnet, dass** es sich bei der Bremseinheit um einen Stoßdämpfer (12, 14), insbesondere einen hydraulischen Stoßdämpfer, handelt.

16. Verfahren nach Anspruch 12 und 14, **dadurch gekennzeichnet, dass** zuerst die Einstellung eines Drosselrückschlagventils der Antriebseinrichtung (11) durch wiederholtes Durchführen des Verfahrens nach Anspruch 10 bis in Schritt d. die Handlungsempfehlung ausgegeben wird, dass kein Parameter anzupassen ist, angepasst wird und daraufhin die Einstellung des Stoßdämpferhubs des Stoßdämpfers (12, 14) durch wiederholtes Durchführen des Verfahrens nach Anspruch 10 bis in Schritt d. die Handlungsempfehlung ausgegeben wird, dass kein Parameter anzupassen ist, angepasst wird.

17. Anordnung zur Durchführung eines Verfahrens nach einem der Ansprüche 1 bis 16 umfassend eine Handhabungseinheit (2), wobei die Einheit ein Grundteil (4), ein an dem Grundteil (4) zwischen zwei Endlagen (6,8) bewegbar angeordnetes Bewegungsteil (10), und eine einstellbare Bremseinrichtung (12, 14) zum Abbremsen des bewegbaren Bewegungsteils (10) umfasst, wobei an einer Schnittstelle des Bewegungsteils (10) ein Smartphone (18) oder ein Tablet angeordnet ist, wobei das Smartphone (18) oder das Tablet wenigstens einen Beschleunigungs- und/oder Gyrosensor und eine Applikationssoftware aufweist, wobei die Applikationssoftware derart ausgebildet ist, dass Messwerte des wenigstens einen Beschleunigungs- und/oder Gyrosensors auswertbar sind, dass die gemessenen Messwerte mit Kennwerten vergleichbar sind und dass eine Handlungsempfehlung ausgebbar ist.

## Claims

1. Method for optimizing the operation of a handling unit (2), in particular a linear or pivot unit, wherein the unit comprises a base part (2), a moving part (10) arranged on the main part (2) so as to be movable between two end positions (6, 8), a drive device (11) for moving the moving part (10), and a braking device (12, 14) for braking the moving part (10), wherein the drive device (11) and/or the braking device (12, 14) is adjustable, in which method the following steps are performed: a. arranging a smartphone (18) or tablet on the moving part (10); b. moving the moving part (10) between the end positions (6.8) and measuring the acceleration by means of at least one acceleration sensor and/or gyro sensor of the smartphone (18) or tablet; c. using an item of application software to evaluate the measured values or the resulting temporal acceleration profile by means of an evaluation algorithm and/or by comparison with stored characteristic values; and d. outputting an action recommendation for the braking device (12, 14) and/or the drive device (11) by means of the application software on the basis of the evaluation in step c..

2. Method according to claim 1, **characterized in that** in step c., the evaluation is carried out by means of an algorithm or by means of characteristic values stored in the smartphone or in the tablet.

3. Method according to claim 2, **characterized in that** the characteristic values comprise a target time until reaching the end position and/or a certain permissible number of sign changes of the temporal acceleration profile between positive and negative acceleration and/or the maximum permissible acceleration and/or the ratio of the maximum positive to the maximum negative acceleration.

4. Method according to claim 1 or 2 or 3, **characterized in that** in step c., the measured values or the resulting temporal acceleration profile are transmitted to a computer server, **in that** the measured values or the resulting temporal acceleration profile is evaluated on the computer server by means of an item of application software, and **in that** in step d., the action recommendation is output either by the application software of the smartphone (18) or tablet or/and by a screen connected to the computer server.

5. Method according to any of claims 1 to 4, **characterized in that** by means of the application software, the measured values are integrated over time, and **in that** the speed values or the temporal speed profile obtained thereby is evaluated according to step c..

6. Method according to any of claims 1 to 4, **characterized in that** in step d., the recommendation is visually displayed on the screen of the smartphone (18) or the tablet.

7. Method according to claim 5, **characterized in that** the recommendation is displayed on the screen in color, with red meaning that one or more settable parameters should be adjusted, yellow meaning that one or more adjustable parameters can be adjusted and green meaning that no settable parameter is to be adjusted.

8. Method according to any of the preceding claims, **characterized in that** in step d., the recommendation is output acoustically.

9. Method according to any of the preceding claims, comprising the further step of: e. manually adjusting one or more settable parameters according to the action recommendation from step d).

10. Method according to any of claims 1 to 8, comprising the further step of: e. transmitting the action recommendation to a control device and adjusting one or more settable parameters according to the action recommendation from step d) by means of the control device.

11. Method according to claim 9 or 10, comprising the further steps of: f. re-performing steps b. to d.; g. performing step e. if in step d. the action recommendation to adjust a parameter is output.

12. Method according to claim 11, comprising the further step of: h. repeatedly performing the method according to claim 11 until in step d. the action recommendation is output that no parameter is to be adjusted.

13. Method according to any of the preceding claims, **characterized in that** before performing step a. or b. or c., the handling unit (2) of which the operation is to be optimized is selected by means of the application software.

14. Method according to any of the preceding claims, **characterized in that** before or after step a., the application software is installed on the smartphone (18) or the tablet if said software was not yet installed on the smartphone (18) before step a. was performed.

15. Method according to any of the preceding claims, **characterized in that** the brake unit is a shock absorber (12, 14), in particular a hydraulic shock absorber.

16. Method according to claims 12 and 14, **characterized in that** first the setting of a throttle non-return valve of the drive device (11) is adjusted by repeatedly performing the method according to claim 10 until in step d. the action recommendation is output that no parameter is to be adjusted, and then the setting of the shock absorber stroke of the shock absorber (12, 14) is adjusted by repeatedly performing the method according to claim 10 until in step d. the action recommendation is output that no parameter is to be adjusted.

17. Arrangement for performing a method according to any of claims 1 to 16, comprising a handling unit (2), wherein the unit comprises a base part (4), a moving part (10) arranged on the base part (4) so as to be movable between two end positions (6.8), and an adjustable braking device (12, 14) for braking the movable moving part (10), wherein a smartphone (18) or a tablet is arranged at an interface of the moving part (10), wherein the smartphone (18) or the tablet has at least one acceleration sensor and/or gyro sensor and an item of application software, wherein the application software is designed such that measured values of the at least one acceleration sensor and/or gyro sensor can be evaluated in such a way that the measured values are comparable with characteristic values and that an action recommendation can be output.

## Revendications

1. Procédé d'optimisation du fonctionnement d'une unité de manipulation (2), en particulier une unité linéaire ou de rotation, l'unité comprenant une partie de base (2), une partie mobile (10) disposée mobile entre deux positions de fin de course (6, 8) sur la partie de base (2), un dispositif d'entraînement (11) pour le déplacement de la partie mobile (10) et un dispositif de freinage (12, 14) pour le freinage de la partie mobile (10), le dispositif d'entraînement (11) et/ou le dispositif de freinage (12, 14) étant réglables, dans lequel les étapes suivantes sont exécutées: a. disposition d'un smartphone (18) ou d'une tablette sur la partie mobile (10); b. déplacement de la partie mobile (10) entre les positions de fin de course (6, 8) et mesure de l'accélération au moyen d'au moins un capteur d'accélération et/ou un capteur gyroscopique du smartphone (18) ou de la tablette; c. utilisation d'un logiciel d'application pour l'évaluation des valeurs de mesure ou de la courbe temporelle d'accélération qui en résulte, par un algorithme d'évaluation et/ou par la comparaison avec des valeurs caractéristiques enregistrées; d. émission d'une recommandation d'action pour le dispositif de freinage (12, 14) et/ou le dispositif d'entraînement (11) au moyen du logiciel d'application sur la base de l'évaluation à l'étape c.

2. Procédé selon la revendication 1, **caractérisé en ce que**, à l'étape c., l'évaluation est effectuée au moyen d'un algorithme ou au moyen de valeurs caractéristiques enregistrées dans le smartphone ou dans la tablette.

3. Procédé selon la revendication 2, **caractérisé en ce que** les valeurs caractéristiques comprennent une durée théorique pour l'atteinte de la position de fin de course et/ou un nombre admissible déterminé de changements de signe de la courbe temporelle d'accélération entre accélération positive et négative et/ou l'accélération maximale admissible et/ou le rapport de l'accélération positive maximale à l'accélération négative maximale.

4. Procédé selon la revendication 1 ou 2 ou 3, **caractérisé en ce que**, à l'étape c., les valeurs de mesure ou la courbe temporelle d'accélération qui en résulte sont transférées sur un serveur informatique, **en ce que**, dans le serveur informatique, les valeurs de mesure ou la courbe temporelle d'accélération qui en résulte sont évaluées au moyen d'un logiciel d'application, et **en ce que**, à l'étape d., la recommandation d'action est émise soit par le logiciel d'application du smartphone (18) ou de la tablette et/ou soit par un écran connecté au serveur informatique.

5. Procédé selon l'une quelconque des revendications 1 à 4, **caractérisé en ce que** les valeurs de mesure sont intégrées avec le temps au moyen du logiciel d'application, et **en ce que** les valeurs de vitesse ou la courbe temporelle de vitesse qui en résulte sont évaluées selon l'étape c.

6. Procédé selon l'une quelconque des revendications 1 à 4, **caractérisé en ce que**, à l'étape d., la recommandation est représentée visuellement sur l'écran du smartphone (18) ou de la tablette.

7. Procédé selon la revendication 5, **caractérisé en ce que** la recommandation est représentée en couleur sur l'écran, rouge signifiant qu'un ou plusieurs paramètres réglables devraient être ajustés, jaune signifiant qu'un ou plusieurs paramètres réglables peuvent être ajustés et vert signifiant qu'aucun paramètre réglable ne doit être ajusté.

8. Procédé selon l'une quelconque des revendications précédentes, **caractérisé en ce que**, à l'étape d., la recommandation est émise de manière acoustique.

9. Procédé selon l'une quelconque des revendications précédentes, comprenant l'étape supplémentaire: e. ajustement manuel d'un ou plusieurs paramètres réglables conformément à la recommandation d'action de l'étape d.

10. Procédé selon l'une quelconque des revendications 1 à 8, comprenant l'étape supplémentaire: e. transmission de la recommandation d'action à un dispositif de commande et ajustement d'un ou de plusieurs paramètres conformément à la recommandation d'action de l'étape d. au moyen du dispositif de commande.

11. Procédé selon la revendication 9 ou 10, comprenant les étapes supplémentaires: f. nouvelle exécution des étapes b. à d.; g. exécution de l'étape e., si, à l'étape d., la recommandation d'action d'ajuster un paramètre est émise.

12. Procédé selon la revendication 11, comprenant l'étape supplémentaire: h. exécution répétée du procédé selon la revendication 11 jusqu'à ce que, à l'étape d., la recommandation d'action qu'aucun paramètre ne doit être ajusté soit émise.

13. Procédé selon l'une quelconque des revendications précédentes, **caractérisé en ce que**, avant l'exécution de l'étape a. ou b. ou c., l'unité de manipulation (2) dont le fonctionnement doit être optimisé est sélectionnée au moyen du logiciel d'application.

14. Procédé selon l'une quelconque des revendications précédentes, **caractérisé en ce que**, avant ou après l'étape a., le logiciel d'application est installé sur le smartphone (18) ou la tablette, si celui-ci n'était pas encore installé sur le smartphone (18) avant l'exécution de l'étape a.

15. Procédé selon l'une quelconque des revendications précédentes, **caractérisé en ce que** l'unité de freinage est un amortisseur (12, 14), en particulier un amortisseur hydraulique.

16. Procédé selon la revendication 12 et 14, **caractérisé en ce que**, pour commencer, le réglage d'un clapet antiretour avec étranglement du dispositif d'entraînement (11) est ajusté par une exécution répétée du procédé selon la revendication 10 jusqu'à ce que, à l'étape d., la recommandation d'action qu'aucun paramètre ne doit être ajusté soit émise et, par la suite, le réglage de la levée d'amortisseur de l'amortisseur (12, 14) est ajusté par une exécution répétée du procédé selon la revendication 10 jusqu'à ce que, à l'étape d., la recommandation d'action qu'aucun paramètre ne doit être ajusté soit émise.

17. Agencement pour l'exécution d'un procédé selon l'une quelconque des revendications 1 à 16, comprenant une unité de manipulation (2), l'unité comprenant une partie de base (4), une partie mobile (10) disposée mobile entre deux positions de fin de course (6, 8) sur la partie de base (4), et un dispositif de freinage (12, 14) pour le freinage de la partie mobile (10), un smartphone (18) ou une tablette étant disposé(e) sur une interface de la partie mobile (10), le smartphone (18) ou la tablette présentant au moins un capteur d'accélération et/ou un capteur gyroscopique et un logiciel d'application, le logiciel d'application étant conçu de telle façon que les valeurs de mesure de l'au moins un capteur d'accélération et/ou un capteur gyroscopique peuvent être évacuées, que les valeurs de mesure mesurées peuvent être comparées à des valeurs caractéristiques et qu'une recommandation d'action peut être émise.
